# EUROPEAN PATENT SPECIFICATION

(11) **EP 2 147 804 B1**
(45) Date of publication and mention of the grant of the patent: **25.05.2011**
(21) Application number: 09165489.7
(22) Date of filing: 15.07.2009
(51) Int. Cl.: B60C 9/00

(54) **A pneumatic tire with polyketone belt structure**
Luftreifen mit Polyketon-Gürtelstruktur
Pneu avec structure de courroie en polykétone

(30) Priority: 22.07.2008 US 177241
(43) Date of publication of application: 27.01.2010
(73) Proprietor: The Goodyear Tire & Rubber Company, Akron, OH 44316-0001 (US)
(72) Inventor: Imhoff, Serge Julien Auguste, L-9184, Schrondweiler (LU); Göksoy, Mustafa, 9357, Bettendorf (LU); Mruk, Ralf, L-7740, Colmar-Berg (LU)
(74) Representative: Kutsch, Bernd

(56) References cited:
- EP-A- 1 609 623
- EP-A- 1 839 907
- EP-A- 1 925 467
- WO-A-2007/108510
- WO-A-2007/122984
- US-A1- 2005 126 673
- US-A1- 2007 012 394

## Description

### Field of the Invention

The present invention is directed to a pneumatic tire. More specifically, the present invention is directed to a pneumatic tire with a belt structure comprising polyketone fibers.

### Background of the Invention

Conventional agricultural, industrial, commercial and truck tires undergo severe service and typically involve high loads. The vehicles to which the tires are mounted typically are exposed to large amounts of debris, hard packed soil conditions and high load service conditions. For example, a back hoe bucket or a front skid loader may be attached to the vehicle. The tires must be capable of engaging gravel, broken concrete, and/or hard packed dirt. Good traction in wet soil conditions is also desirable.

A conventional agricultural, industrial, commercial, or truck tire may have a nonskid depth at the centerline of the tire of approximately one inch (2.54 cm). The conventional tire, when produced in a radial construction, may have a carcass with two to eight plies of synthetic reinforcement or a single steel ply. The synthetic plies may typically be nylon or polyester. The conventional tire may further include a belt structure with up to six plies (or belts) of high flex polyester, rayon, nylon, aramid, or steel. Agricultural and industrial tires have conventionally been fabric reinforced in order to provide better ride and handling.

Further, the general use of polyketone fibers for tire reinforcement has been proposed.

Document EP-A-1 839 907 discloses the features of the preamble of claim 1.

### Summary of the Invention

The present invention is directed to a pneumatic tire such as a pneumatic tire for agricultural, industrial, commercial, or truck service applications according to claim 1.

Dependent claims refer to preferred embodiments of the invention.

In one aspect of the present invention, the tread may include two or three circumferential rows of lugs. A first circumferential row of lugs extends axially inward from a first shoulder region of the tread. A second circumferential row of lugs extends axially inward from a second shoulder region of the tread. The second shoulder region of the tread is axially opposite the first shoulder region of the tread.

According to one aspect of the present invention, an additional central circumferential row of lugs may be positioned axially between the first and second circumferential rows of lugs.

In another aspect of the present invention, the polyketone yarns contain a ketone unit represented by -(CH₂CH₂-CO)- as a main repeating unit. The polyketone yarns may be made from a polyketone solution having an intrinsic viscosity of not less than 0.5 dl/g.

In still another aspect of the present invention, the crystal orientation of the polyketone yarns is not less than 90 percent and/or has a density of not less than 1.29 g/cm³. Alternatively, the density may be from 1.29 to 1.31 g/cm³. The polyketone yarns may further have an elastic modulus of not less than 200 cN/dtex and a heat shrinkage of -1 percent to 3 percent. Alternatively, the heat shrinkage may be 0.1 percent to 1.5 percent.

In one aspect of the present invention, the polyketone yarns are produced by wet spinning a polyketone solution having a phase separation temperature in the range of from 0 to 150° Celsius.

In a yet another aspect of the present invention, the twist level of the cords and the twist level of the yarns are preferably the same. Further, the twist level of the cords may be 6.9 TPI and the twist level of the yarns may be 6.9 TPI. Alternatively, the twist level of the cords may be 3.0 TPI and the twist level of the yarns may be 3.0 TPI. As another alternative, the twist level of the cords may be 5.0 TPI and the twist level of the yarns may be 5.0 TPI. As yet another alternative, the twist level of the cords may be 8.0 TPI and the twist level of the yarns may be 8.0 TPI.

In one aspect of the present invention, the belt structure comprising the cords has 16 EPI ("ends per inch") to 26 EPI. Alternatively, the cords may have 16 EPI to 20 EPI.

In a further aspect of the present invention, the yarns may have a linear density in a range from 1650 dtex to 1690 dtex, such as 1670 dtex.

In another aspect of the present invention, an example tread for use with the present invention may include two or three circumferential rows of lugs.

### Definitions

The following definitions are controlling for the disclosed invention.

"Axial" and "axially" mean lines or directions that are parallel to the axis of rotation of the tire; synonymous with "lateral" and "laterally".

"Belt structure" means at least one, preferably at least two layers of plies (or belts) of preferably parallel cords, woven or unwoven, underlying the tread. Preferably, the one or more plies of cords are unanchored to the bead, and preferably have both left and right cord angles in the range from 16 degrees to 67 degrees with respect to the Equatorial Plane of the tire.

"Carcass" means the tire structure apart from the belt structure, tread, undertread, and sidewall rubber over the plies, but including the beads.

"Circumferential" means lines or directions extending along the perimeter of the surface of the annular tire parallel to the Equatorial Plane (EP) and perpendicular to the axial direction.

"Cord" means one of the reinforcement strands which plies in the tire comprise.

"Equatorial plane (EP)" means the plane perpendicular to the tire's axis of rotation and passing through the center of its tread.

"Filament" refers to a single yarn.

"Radial" and "radially" mean directions radially toward or away from the axis of rotation of the tire.

"Undertread" refers to a layer of rubber placed between a reinforcement package and the tread rubber in a tire.

### Brief Description of the Drawings

The invention will be described by way of example and with reference to the accompanying drawings in which:
FIG. 1 is a perspective view of a first example tire for use with the present invention.
FIG. 2 is a plan view of the tire of FIG. 1.
FIG. 3 is an enlarged perspective, fragmentary view of a portion of the tread of the tire of FIG. 1.
FIG. 4 is a cross-sectional view of the tire of FIG. 1 taken along lines 4-4 of FIG. 2.
FIG. 5 is a plan view of a second example tire for use with the present invention.

### Detailed Description of an Example Embodiment of the Invention

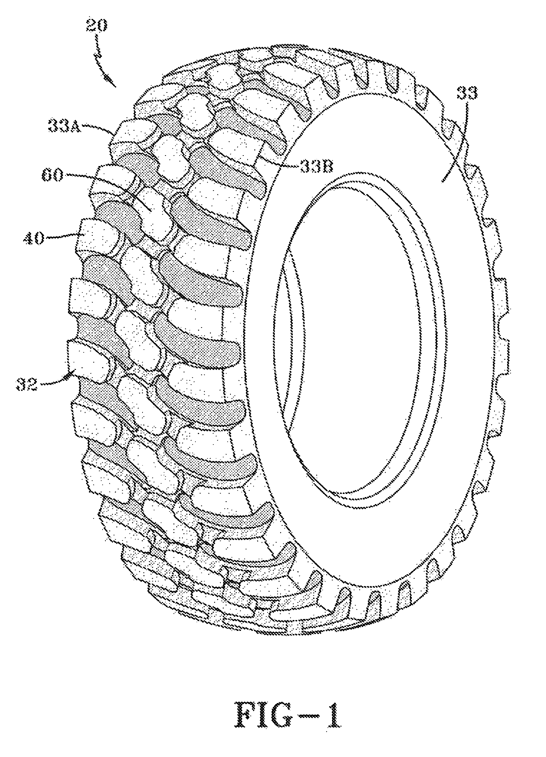

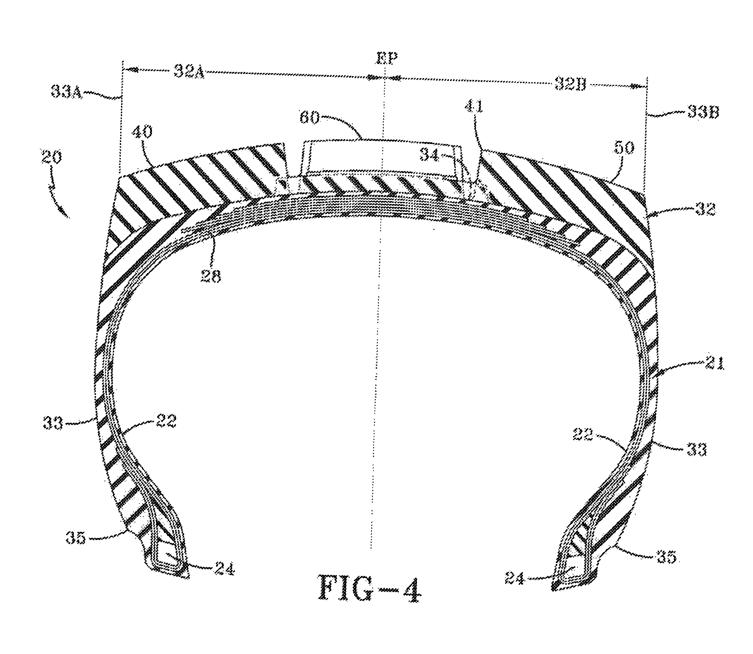

A first example radial ply pneumatic tire 20 for agricultural, industrial, commercial, or truck service is illustrated in Figs. 1 through 4. The example tire 20, for use with the present invention, includes a carcass 21 with at least one ply 22 reinforced by rubber coated cords, a pair of annular extending bead cores 24. The ply 22 is wrapped about each bead core 24 and extends therebetween. A belt structure 28 (Fig. 4) is disposed radially outward of the ply 22 and a tread 32 is disposed radially outward of the belt structure and carcass 21. The tread 32 has a tread base 34 and two lateral edges 33A, 33B. The distance halfway between the lateral edges 33A, 33B defines the tread equatorial plane EP. A plurality of lugs 40, 50, 60 extends radially outwardly from the inner tread base 34.

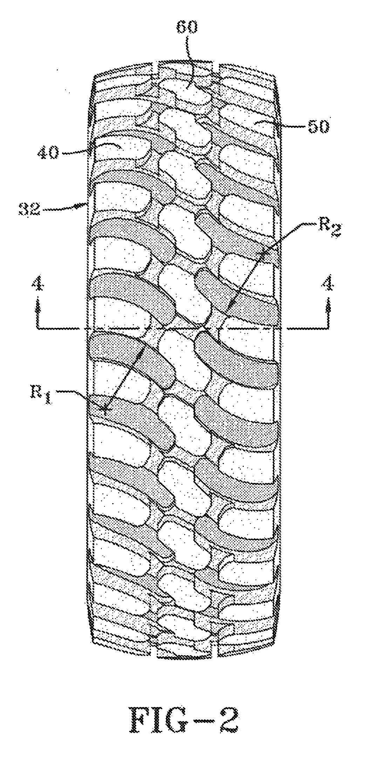

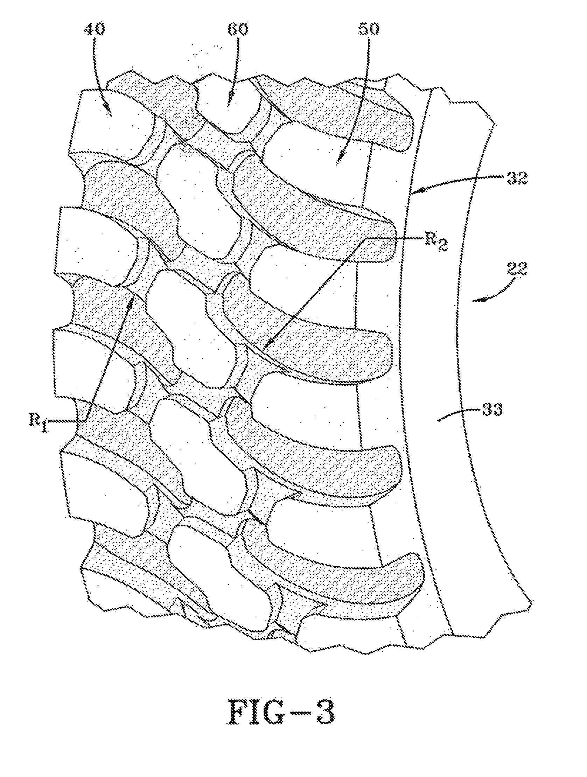

The example tread 32 features three circumferential rows of lugs. A first row extends axially inward from a first shoulder region of the tread 32. A second row extends axially inward from a second, opposite shoulder region of the tread 32. A central row is positioned between the first and second rows. The lugs 40 of the first circumferential row are similar in shape, but opposite in orientation, to the lugs 50 of the second circumferential row (FIG. 2). Each lug 40 of the first circumferential row lies within a first tread half 32A (FIG. 4). Each lug 50 of the second circumferential row lies within a second tread half 32B (FIG. 4). The lugs 60 of the central row lie in both the first tread half 32A and second tread half 32B. All of the lugs 40, 50, 60 have a leading edge 41 and a trailing edge respectively. The leading edge 41 of a lug 40 of the first circumferential row and a majority of the leading edge of a lug 60 of the central circumferential row are defined by a single constant radius of curvature R₁. The trailing edge of a lug 50 of the second circumferential row and a majority of the trailing edge of a lug 60 of the central circumferential row are defined by a single constant radius of curvature R₂. The centers of the radii of curvature R₁, R₂ are located in opposite tread halves 32A, 32B (FIGS. 2 and 3).

As shown in FIG. 4, the tire 20 has a carcass 21 with one or more carcass plies 22 extending circumferentially about the axis rotation of the tire. The example tire 20 typically has 3 to 6 cord reinforced plies 22 having synthetic nylon or polyester cords. The carcass plies 22 are anchored around a pair of substantially inextensible annular beads 24. A belt structure 28 has one or more belt plies disposed radially outward from the carcass plies 22. The belt structure 28 provides reinforcement for a crown region (i.e., the tread 28) of the example tire 20. A circumferentially extending tread 32 is located radially outward of the belt structure 28.

A sidewall portion 33 extends radially inward from each axial or lateral tread edge 33A, 33B of the tread 32 to an annular bead portion 35 having the beads 24 located therein. The carcass plies 22 typically have the cords oriented radially. The number of plies 22 depends on the load carrying requirements of the tire 20.

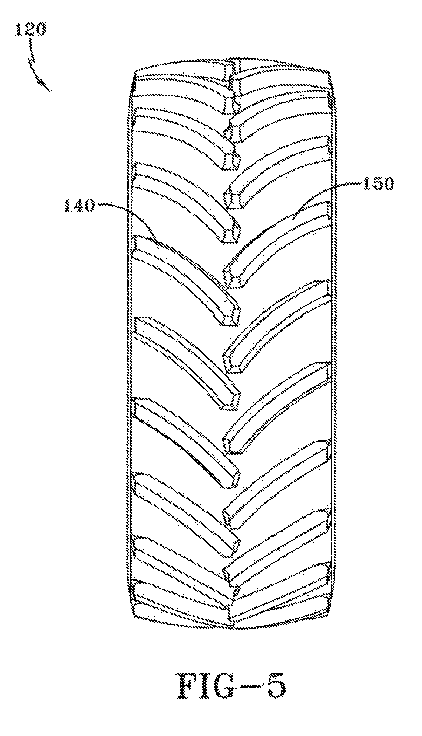

A second example tire 120 for use with the present invention is illustrated in Fig. 5. The tread of this example tire 120 generally similar to the tread of the first example tire 20 of Figs. 1 through 4 except that the tread of the second example tire 120 has only two circumferential rows of lugs 140, 150 and no central row.

In accordance with the present invention, the belt structure 28 of the first example tire of Figs. 1 through 4 or the second example tire 120 of Fig. 5 comprises polyketone fibers, such as those described in US-B- 6,818,728. These polyketone fibers are used to form strands of yarns, which are twisted together to form a cord.

Polyketone is a high tenacity material that may advantageously replace aramid in several applications. For example, polyketone may be used in place of aramid as belt material in Radial Farm Tires, such as the first example tire 20. The breaking strength of a typical polyketone cord is 70 percent of the breaking strength of an aramid cord of the same construction. However, a reduction of twist in a polyketone cord may compensate for some or all of this strength difference, without severely affecting other properties.

The below table compares properties of single end dipped 1670 dtex/1/3 cords of an aramid with a 6.9/6.9 twist construction (cord twist of 6.9 twists per inch/yarn twist of 6.9 twists per inch), a 1670 dtex/1/3 cord of polyketone yarns with a 6.9/6.9 twist construction, a 1670 dtex/1/3 cord of polyketone yarns with a 5.0/5.0 twist construction (cord twist of 5.0 twists per inch/yarn twist of 5.0 twists per inch), and a 1670 dtex/1/3 cord of polyketone yarns with a 3.0/3.0 twist construction.

| **Material** | **Aramid** | | **Polyketone** | | **Polyketone** | | **Polyketone** | |
|---|---|---|---|---|---|---|---|---|
| **Construction (dtex/1/3)** | **1670/1/3** | | **1670/1/3** | | **1670/1/3** | | **1670/1/3** | |
| **Twist Z** | **6.9** | | **6.9** | | **5.0** | | **3.0** | |
| **Twist S** | **6.9** | | **6.9** | | **5.0** | | **3.0** | |

| | Average | Std.Dev. | Average | Std. Dev. | Average | Std. Dev. | Average | Std. Dev. |
|---|---|---|---|---|---|---|---|---|
| **YARN** | | | | | | | | |
| Breaking Strength (N) | 318.9 | 8.6 | 305.4 | 5.1 | | | | |
| Elongation at break (%) | 3.9 | 0.0 | 6.2 | 0.2 | | | | |

| **DIPPED** | | | | | | | | |
|---|---|---|---|---|---|---|---|---|
| Breaking Strength (N) | 860.3 | 9.9 | 612.3 | 8.4 | 742.2 | 11.5 | 836.5 | 8.4 |
| Elongation at break (%) | 6.3 | 0.0 | 7.5 | 0.2 | 6.6 | 0.2 | 6.1 | 0.2 |
| Lase @ 1% (N) | 89.6 | 3.8 | 51.9 | 2.1 | 60.0 | 1.4 | 74.5 | 3.7 |
| Lase @ 3% (N) | 318.8 | 5.7 | 194.7 | 6.0 | 279.7 | 5.7 | 365.0 | 8.4 |

| **ADHESION** | | | | | | | | |
|---|---|---|---|---|---|---|---|---|
| Static Strip Adhesion | 161.2 | 5.1 | 220.7 | 2.9 | 247.0 | 5.2 | 236.6 | 14.4 |
| (N)-RT | | | | | | | | |

| **FATIGUE** | | | | | | | | |
|---|---|---|---|---|---|---|---|---|
| Breaking Strength | 34 | | 62 | | 40 | | 40 | |
| Retained after 2h (%) | | | | | | | | |

The strength of the single end dipped 6.9/6.9-twist polyketone cord is 72 percent of the aramid strength (621.3N/860.3N). As expected, the strength increases with decreasing twist-level, which results in a strength near the strength of the aramid for the 3/3-construction (836.5N/860.3N). The comparison of the dipped cord load at specified elongation, or Lase, values indicates that the 1 percent Lase of the aramid cord is higher than that of any of the polyketone cord constructions. However, the 3 percent Lase of the dipped aramid cord is between the values of the 3/3 and the 5/5-dipped polyketone cords (318.8N between 365.0N and 279.7N).

Adhesion test samples were prepared by a standard peel adhesion test on 2.54 mm wide specimens. Strip adhesion samples were made by plying up a layer of fabric with both sides coated with 0.30 mm rubber coat compound to make a rubberized fabric, followed by preparation of a sandwich of two layers of the rubberized fabric separated by a mylar window sheet. The sandwich was cured for 20 min at 150°C and 2.54 mm samples were cut centered on each window in the mylar. The cured samples were then tested for adhesion between the rubberized fabrics in the area defined by the mylar window by a 180° pull on a test apparatus. Parallel samples were cured using the indicated cure cycles. Cured samples were then tested for adhesion at the indicated test conditions. A standard production compound was used for testing. The comparison of the strip adhesion force values shows that all three investigated polyketone constructions show a clearly superior adhesion behavior compared to aramid.

Fatigue test samples were prepared by curing a pad of rubber compound in which the cords were integrated. The cured samples were then cut into 25.4 mm wide strips parallel to the cords. The samples were flexed for 2 hours in a "shoeshine" test applying a load of 355.9 N. The cords were then removed from the rubber strips. The retained strength of the flexed cords was compared to the original strength of the cord prior to flexing. Values of the retained strength were reported in percent of the strength of the cords prior to flexing. The analysis of the fatigue properties shows that polyketone cords exhibit a superior fatigue performance compared to aramid cords of the same construction.

Lowering of polyketone twist levels lead to a decrease of fatigue performance. However, polyketone cords of 5/5 and 3/3 constructions have comparable fatigue performance as aramid cords of 6.9/6.9 construction. Therefore, it is feasible to partially compensate for the lower strength of polyketone compared to aramid by reduction of the polyketone twist level.

Further, polyketone cords may be processed with a standard Resorcinol-Formaldehyde Latex (RFL) adhesive to reach the same adhesion level as aramid cords, which require the use of additional adhesion promoters, such as epoxy components in the adhesive, in order to assure a satisfactory level of adhesion. Thus, a cheaper and more environmentally friendly dip formulation (i.e., RFL without epoxy) may be used.

One example of polyketone fibers for use with the present invention are fibers containing a ketone unit shown by the below formula as a main repeating unit. The polyketone fibers are made from a polyketone solution having an intrinsic viscosity of not less than 0.5 dl/g, exhibiting a crystal orientation of not less than 90 percent, a density of not less than 1.29 g/cm³ (alternately between 1.29 to 1.31 g/cm³), an elastic modulus of not less than 200 cN/dtex, and a heat shrinkage of -1 percent to 3 percent (alternately 0.1 percent to 1.5 percent).

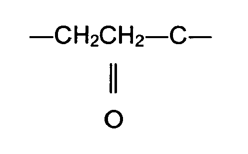

Further, these example polyketone fibers may be produced by wet spinning a polyketone solution having a phase separation temperature in the range of 0 to 150° Celsius. The example polyketone fibers have high strength, high elastic modulus, excellent fatigue resistance, good processability, good heat resistance, dimensional stability, and excellent adhesion properties. The example fibers are therefore suitable for the above discussed agricultural industrial and commercial tire applications.

## Claims

1. A pneumatic tire having an axis of rotation, the pneumatic tire comprising:
a carcass (21) having at least one reinforced ply (22);
a tread (32) disposed radially outward of the carcass (21);
and a belt structure (28) disposed radially between the carcass (21) and the tread (32), the belt structure (28) comprising polyketone fibers and being **characterised by** comprising cords of at least three strands of twisted polyketone yarn, the twisted polyketone yarns having a linear density from 1570 dtex to 1770 dtex and a twist level from 3.0 TPI (turns per inch) to 8.0 TPI, the cords having a twist level from 3.0 TPI to 8.0 TPI and a twist direction opposite to a twist direction of the polyketone yarns.

2. The pneumatic tire of claim 1 wherein the twist level of the cords is the same as the twist level of the polyketone yarns.

3. The pneumatic tire of claim 1 or 2 wherein the cords form a ply of the belt structure (28), the construction of the ply comprising the cords having 16 EPI to 26 EPI.

4. The pneumatic tire of at least one of the previous claims wherein the tread (32) includes two or three circumferential rows of lugs (40, 50, 60).

5. The pneumatic tire of at least one of the previous claims, wherein the polyketone yarns contain a ketone unit represented by -(CH₂CH₂-CO)- as a main repeating unit.

6. The pneumatic tire of at least one of the previous calims wherein the polyketone yarns have at least one of:
a density of not less than 1.29 g/cm³; and/or
an elastic modulus of not less than 200 cN/dtex; and/or
a heat shrinkage of -1 percent to 3 percent.

7. The pneumatic tire of at least one of the previous claims wherein the polyketone yarns have a linear density of 1650 dtex, to 1690 dtex such as 1670 dtex.

8. The pneumatic tire of at least one of the previous claims wherein the cords form a ply of the belt structure (28), the construction of the ply comprising the cords having 16 to 20 EPI, such as 18 EPI.

9. The pneumatic tire of at least one of the previous claims wherein the twist level of the cords is 6.9 TPI and the twist level of the polyketone yarns is 6.9 TPI.

10. The pneumatic tire of at least one of the previous claims wherein the twist level of the cords is 3.0 TPI and the twist level of the polyketone yarns is 3.0 TPI.

11. The pneumatic tire of at least one of the previous claims wherein the twist level of the cords is 5.0 TPI and the twist level of the polyketone yarns is 5.0 TPI.

12. The pneumatic tire of at least one of the previous claims wherein the twist level of the cords is 8.0 TPI and the twist level of the polyketone yarns is 8.0 TPI.

13. The pneumatic tire of at least one of the previous claims wherein each cord consists of three strands of twisted polyketone yarns.

14. The pneumatic tire of claim 1 wherein the pneumatic tire is an agricultural tire.

15. The pneumatic tire of claim 1 wherein the pneumatic tire is an industrial service tire.

## Patentansprüche

1. Luftreifen mit einer Drehachse, wobei der Luftreifen umfasst:
eine Karkasse (21) mit mindestens einer verstärkten Lage (22);
eine radial auswärts von der Karkasse (21) angeordnete Lauffläche (32);
und eine radial zwischen der Karkasse (21) und der Lauffläche (32) angeordnete Gürtelstruktur (28), wobei die Gürtelstruktur (28) Polyketonfasern umfasst und **dadurch gekennzeichnet ist, dass** sie Korde aus mindestens drei Strängen verdrillten Polyketongarns umfasst, wobei die verdrillten Polyketongarne eine lineare Dichte von 1570 dtex bis 1770 dtex und einen Verdrillungsgrad von 3,0 TPI (Drehungen je Zoll) bis 8,0 TPI aufweisen, wobei die Korde einen Verdrillungsgrad von 3,0 TPI bis 8,0 TPI und eine Verdrillungsrichtung entgegengesetzt zu einer Verdrillungsrichtung der Polyketongarne aufweisen.

2. Luftreifen nach Anspruch 1, wobei der Verdrillungsgrad der Korde der gleiche wie der Verdrillungsgrad der Polyketongarne ist.

3. Luftreifen nach Anspruch 1 oder 2, wobei die Korde eine Lage der Gürtelstruktur (28) bilden, wobei die Konstruktion der Lage die Korde mit 16 EPI bis 26 EPI umfasst.

4. Luftreifen nach mindestens einem der vorgenannten Ansprüche, wobei die Lauffläche (32) zwei oder drei umfangsgerichtete Reihen von Stollen (40, 50, 60) beinhaltet.

5. Luftreifen nach mindestens einem der vorgenannten Ansprüche, wobei die Polyketongarne eine durch -(CH₂CH₂-CO)- dargestellte Ketoneinheit als Haupt-Repetiereinheit enthalten.

6. Luftreifen nach mindestens einem der vorgenannten Ansprüche, wobei die Polyketongarne mindestens eines aufweisen von:
einer Dichte von nicht weniger als 1,29 g/cm³; und/oder
einem Elastizitätsmodul von nicht weniger als 200 cN/dtex; und/oder
einer Wärmeschrumpfung von -1 Prozent bis 3 Prozent.

7. Luftreifen nach mindestens einem der vorgenannten Ansprüche, wobei die Polyketongarne eine lineare Dichte von 1650 dtex bis 1690 dtex, wie etwa 1670 dtex, aufweisen.

8. Luftreifen nach mindestens einem der vorgenannten Ansprüche, wobei die Korde eine Lage der Gürtelstruktur (28) bilden, wobei die Konstruktion der Lage die Korde mit 16 bis 20 EPI, wie etwa 18 EPI, umfasst.

9. Luftreifen nach mindestens einem der vorgenannten Ansprüche, wobei der Verdrillungsgrad der Korde 6,9 TPI beträgt und der Verdrillungsgrad der Polyketongarne 6,9 TPI beträgt.

10. Luftreifen nach mindestens einem der vorgenannten Ansprüche, wobei der Verdrillungsgrad der Korde 3,0 TPI beträgt und der Verdrillungsgrad der Polyketongarne 3,0 TPI beträgt.

11. Luftreifen nach mindestens einem der vorgenannten Ansprüche, wobei der Verdrillungsgrad der Korde 5,0 TPI beträgt und der Verdrillungsgrad der Polyketongarne 5,0 TPI beträgt.

12. Luftreifen nach mindestens einem der vorgenannten Ansprüche, wobei der Verdrillungsgrad der Korde 8,0 TPI beträgt und der Verdrillungsgrad der Polyketongarne 8,0 TPI beträgt.

13. Luftreifen nach mindestens einem der vorgenannten Ansprüche, wobei jeder Kord aus drei Strängen verdrillter Polyketongarne besteht.

14. Luftreifen nach Anspruch 1, wobei der Luftreifen ein landwirtschaftlicher Reifen ist.

15. Luftreifen nach Anspruch 1, wobei der Luftreifen ein Reifen zur gewerblichen Nutzung ist.

## Revendications

1. Bandage pneumatique possédant un axe de rotation, le bandage pneumatique comprenant :
une carcasse (21) possédant au moins une nappe renforcée (22) ;
une bande de roulement (32) disposée en direction radiale à l'extérieur de la carcasse (21) ;
et une structure de ceintures (28) disposée en direction radiale entre la carcasse (21) et la bande de roulement (32), la structure de ceintures (28) comprenant des fibres de polycétone et étant **caractérisée par le fait qu'**elle comprend des câblés qui sont constitués par au moins trois brins d'un fil de polycétone torsadé possédant une densité linéaire de 1570 dtex à 1770 dtex et un niveau de torsion de 3,0 TPI (tours par pouce) à 8,0 TPI, les câblés possédant un niveau de torsion de 3,0 TPI à 8,0 TPI et une direction de torsion opposée à la direction de torsion des fils de polycétone.

2. Bandage pneumatique selon la revendication 1, dans lequel le niveau de torsion des câblés est identique au niveau de torsion des fils de polycétone.

3. Bandage pneumatique selon la revendication 1 ou 2, dans lequel les câblés forment une nappe de la structure de ceintures (28), la construction de la nappe comprenant les câblés possédant une valeur de 16 EPI à 26 EPI.

4. Bandage pneumatique selon au moins une des revendications précédentes, dans lequel la bande de roulement (32) englobe deux ou trois rangées circonférentielles de barrettes (40, 50, 60).

5. Bandage pneumatique selon au moins une des revendications précédentes, dans lequel les fils de polycétone contiennent une unité de cétone répondant à la formule -(CH₂-CH₂-CO)- à titre d'unités de répétition principale.

6. Bandage pneumatique selon au moins une des revendications précédentes, dans lequel les fils de polycétone possèdent au moins une caractéristique choisie parmi le groupe comprenant :
une densité qui n'est pas inférieure à 1,29 g/cm³ ; et/ou
un module d'élasticité qui n'est pas inférieur à 200 cN/dtex ; et/ou
un retrait thermique de -1 % à 3 %.

7. Bandage pneumatique selon au moins une des revendications précédentes, dans lequel les fils de polycétone possèdent une densité linéaire de 1650 dtex à 1690 dtex, par exemple une densité linéaire de 1670 dtex.

8. Bandage pneumatique selon au moins une des revendications précédentes, dans lequel les câblés forment une nappe de la structure de ceintures (28), la construction de la nappe comprenant les câblés possédant une valeur de 16 EPI à 20 EPI, par exemple une valeur de 18 EPI.

9. Bandage pneumatique selon au moins une des revendications précédentes, dans lequel le niveau de torsion des câblés s'élève à 6,9 TPI et le niveau de torsion des fils de polycétone s'élève à 6,9 TPI.

10. Bandage pneumatique selon au moins une des revendications précédentes, dans lequel le niveau de torsion des câblés s'élève à 3,0 TPI et le niveau de torsion des fils de polycétone s'élève à 3,0 TPI.

11. Bandage pneumatique selon au moins une des revendications précédentes, dans lequel le niveau de torsion des câblés s'élève à 5,0 TPI et le niveau de torsion des fils de polycétone s'élève à 5,0 TPI.

12. Bandage pneumatique selon au moins une des revendications précédentes, dans lequel le niveau de torsion des câblés s'élève à 8,0 TPI et le niveau de torsion des fils de polycétone s'élève à 8,0 TPI.

13. Bandage pneumatique selon au moins une des revendications précédentes, dans lequel chaque câblé est constitué par trois brins de fils de polycétone torsadés.

14. Bandage pneumatique selon la revendication 1, dans lequel le bandage pneumatique est un bandage pneumatique agricole.

15. Bandage pneumatique selon la revendication 1, dans lequel le bandage pneumatique est un bandage pneumatique à usage industriel.
